# EUROPÄISCHE PATENTSCHRIFT

(11) **EP 2 857 232 B1**
(45) Veröffentlichungstag und Bekanntmachung des Hinweises auf die Patenterteilung: **25.01.2017**
(21) Anmeldenummer: 14003220.2
(22) Anmeldetag: 17.09.2014
(51) Int. Cl.: B60D 1/46, B60D 1/58, B60D 1/06

(54) **Höhenverstellbare Anhängerkupplung**
Height-adjustable trailer coupling
Attelage réglable en hauteur

(30) Priorität: 01.10.2013 DE 202013008659 U
(43) Veröffentlichungstag der Anmeldung: 08.04.2015
(73) Patentinhaber: Sauermann, Franz, 86558 Hohenwart-Freinhausen (DE)
(72) Erfinder:
(74) Vertreter: TBK

(56) Entgegenhaltungen:
- EP-A1- 0 016 317
- EP-A1- 2 100 757

## Beschreibung

Die Erfindung betrifft eine höhenverstellbare Anhängerkupplung.

Aus der EP 2 524 822 A2 ist eine höhenverstellbare Einrichtung für eine Anhängerkupplung eines Ackerschleppers bekannt. Diese besteht aus einem Träger, der zwischen zwei Führungsschienen geführt ist. In den Führungsschienen sind Bohrungen vorgesehen, in die jeweils ein Sperrbolzen eindringen kann. Diese Sperrbolzen sind axial verstellbar, so dass der Träger mit der Führungsschiene verriegelt wird. Auf diese Weise wird eine weitere Verschiebung des Trägers unterbunden.

Aus der EP 0 294 509 A1 ist eine weitere höhenverstellbare Anhängerkupplung bekannt. Diese Anhängerkupplung weist einen Träger auf, der zwischen vertikalen Führungsschienen verschiebbar ist. Der Träger ist mittels einer Gewindespindel in seiner Höhe verstellbar. Außerdem ist an einer der Führungsschienen ein Riegel federnd gegen den verschiebbaren Träger vorgespannt. Dieser Riegel verhindert ein ungewolltes herausfallen des Trägers aus den Führungsschienen. Nachdem der Träger keinerlei dem Riegel zugeordnete Bohrungen oder Vertiefungen aufweist, kann dieser Riegel auch nicht zum Halten des Trägers in einer vorgegebenen Höhenlage genutzt werden. Dies ist auch nicht erforderlich, da der Träger von der Gewindespindel in jeder beliebigen Höhe ausreichend sicher gehalten werden kann.

Aus der EP 0 016 317 A1 ist eine höhenverstellbare Anhängerkupplung bekannt. Diese weist einen Träger auf, der ein Kupplungsglied trägt und zwischen zwei Führungsschienen geführt ist. Diese Führungsschienen weisen Vertiefungen auf, in denen Bohrungen vorgesehen sind, in die bewegliche Sperrbolzen eingreifen können. Diese Sperrbolzen sind am Träger zwischen einer eine Verstellung des Trägers ermöglichenden Lösestellung und einer in die Bohrungen eingreifenden Arretierstellung verschiebbar gehalten. Diese Sperrbolzen sind dabei gelenkig mit Hebeln verbunden, die gelenkig an einer gemeinsamen, drehbar gelagerten Scheibe abgestützt sind. Durch Verdrehen dieser Scheibe werden beide Sperrbolzen synchron und zueinander gegenläufig verstellt. Ein individuelles Verstellen eines Sperrbolzens ist damit nicht mehr möglich.

Aus der EP 2 100 757 A1 ist eine gattungsgemäße, höhenverstellbare Anhängerkupplung bekannt. Auch diese weist einen Träger auf, der ein Kupplungsglied trägt. Dieser Träger ist zwischen zwei Führungsschienen geführt, in denen Bohrungen vorgesehen sind. In diese Bohrungen können bewegliche Sperrbolzen eingreifen, die am Träger zwischen einer die Verstellung des Trägers ermöglichenden Lösestellung und einer in die Bohrungen eingreifenden Arretierstellung verschiebbar gehalten sind. In einer der Führungsschienen ist außerdem ein Arretierstift gehalten, der federnd gegen den Träger vorgespannt ist und in eine Bohrung im Träger eingreifen kann, um den Träger in dieser Stellung zu arretieren. In dieser Stellung fluchten dabei die Sperrbolzen mit entsprechenden Bohrungen der Führungsschienen. Der Arretierstift weist außerdem eine Kontaktfläche auf, mit der er an einem mit der Führungsschiene fest verbundenen Teil anliegt. Diese Anhängerkupplung hat sich in der Praxis bewährt und bildet den Ausgangspunkt der vorliegenden Erfindung.

Der Erfindung liegt die Aufgabe zugrunde, eine höhenverstellbare Anhängerkupplung der eingangs genannten Art zu schaffen, die sich durch eine erleichterte Handhabung auszeichnet.

Diese Aufgabe wird erfindungsgemäß mit den folgenden Merkmalen gelöst.

Die erfindungsgemäße Anhängerkupplung weist mindestens einen verschiebbaren Träger auf, der mindestens ein Kupplungsglied trägt. Es ist dabei unerheblich, wie dieses Kupplungsglied ausgebildet ist. Der Träger ist zwischen Führungsschienen verschiebbar geführt, so dass er nur eine im Wesentlichen vertikale Bewegung ausführen kann. In den Führungsschienen sind Vertiefungen und/oder Bohrungen vorgesehen, in die Sperrbolzen eingreifen können. Diese Sperrbolzen sind dabei zwischen einer den Träger freigebenden Lösestellung und einer in die Vertiefung eingreifenden Arretier-stellung verstellbar. Um den Träger in seiner Höhenlage verstellen zu können, müssen beide Sperrbolzen in ihre Lösestellung gebracht werden. Anderenfalls bleibt der Träger arretiert.

Zur Erleichterung der Handhabung der höhenverstellbaren Anhängerkupplung ist in mindestens einer der Führungsschienen mindestens ein Arretierstift gehalten, der federnd gegen den Träger vorgespannt ist. Dieser Arretierstift kann in eine im Träger vorgesehene Sperraufnahme eingreifen, die vorzugsweise als Sackbohrung ausgebildet ist. Diese Arretieraufnahme und der Arretierstift sind dabei derart angeordnet, dass die Sperrbolzen mit den Vertiefungen und/oder Bohrungen der Führungsschienen fluchten, wenn der mindestens eine Arretierstift in die mindestens eine Sperraufnahme des Trägers eingreift. Damit muss nicht umständlich die korrekte Höhenlage des Trägers gesucht werden, in der die Sperrbolzen mit den entsprechenden Vertiefungen und/oder Bohrungen des Trägers fluchten. Es reicht vielmehr aus, den Träger relativ zu den Führungsschienen zu verschieben. Sobald der mindestens eine Arretierstift mit der Arretieraufnahme fluchtet, wird der Träger in dieser Stellung arretiert, so dass nur noch die Sperrbolzen in deren Arretierstellung verstellt werden müssen. Zur weiteren Vereinfachung der Bedienung der höhenverstellbaren Anhängerkupplung ist der mindestens eine Arretierstift und der Träger mit mindestens einer Anfasung versehen, um den mindestens einen Arretierstift beim Verschieben des Trägers entgegen der Vorspannung vom Träger wegzudrücken. Damit muss beim Einschieben des Trägers in die Führungsschienen der mindestens eine Arretierstift nicht entgegen der Federkraft gezogen werden. Dies bewerkstelligt die Anfasung von selbst. Damit muss lediglich der Träger in die Führungsschienen eingeschoben werden, wofür beide Hände benutzbar sind. Damit ergibt sich eine besonders einfache Bedienung. Zum Lösen des Trägers von den Führungsschienen werden zunächst die Sperrbolzen in den Träger zurückgezogen. In dieser Lage wird der Träger ausschließlich vom Arretierstift gehalten. Durch Herausziehen des mindestens einen Arretierstiftes aus dem Träger ist dieser frei entlang der Führungsschienen bewegbar. Sobald sich der Träger auch nur geringfügig entlang der Führungsschienen bewegt hat, verhindert der Träger selbst ein Verschieben des Arretierstiftes in die Arretieraufnahme, so dass der Träger leicht aus den Führungsschienen entnommen werden kann.

Entscheidend ist insbesondere, dass die Funktionen der Arretierung und Verriegelung des Trägers von getrennten Sperrmitteln, nämlich einerseits dem Arretierstift und andererseits den Sperrbolzen realisiert werden. Der Arretierstift muss lediglich dem Eigengewicht des Trägers samt Kupplung widerstehen und kann daher entsprechend schwach ausgebildet sein. Insbesondere kann auch der zurückzulegende Weg des Arretierstiftes klein gehalten werden. Dies hat zur Folge, dass die Federvorspannung des Arretierstiftes ebenfalls schwach ausgelegt werden kann, so dass der Arretierstift problemlos beim Einschieben des Trägers in die Führungsschienen weggedrückt werden kann. Zur Abstützung der doch erheblichen Stützlasten, die von einem Anhänger hervorgerufen werden, reicht der Arretierstift jedoch in keiner Weise aus. Hierfür sind die Sperrbolzen vorgesehen, die in der Regel wesentlich massiver als der Arretierstift ausgebildet sind und auch einen wesentlich größeren Weg zurücklegen. Damit können die Sperrbolzen wesentlich höheren Scherkräften widerstehen, die durch das zusätzliche Gewicht eines angekoppelten Anhängers hervorgerufen werden.

Um zu verhindern, dass der Arretierstift in eine Bohrung des Trägers eindringen kann, die vom Sperrbolzen durchdrungen ist, ist es vorteilhaft, wenn mindestens einer der Sperrbolzen in der Lösestellung in etwa mit einer Anlagefläche des Trägers der Führungsschiene fluchtet, welche in etwa senkrecht zur Verschieberichtung des mindestens einen Arretierstiftes ausgerichtet ist. Falls während der Verschiebung des Trägers relativ zu den Führungsschienen der mindestens eine Arretierstift mit einem der Sperrbolzen fluchtet, bleibt der mindestens eine Arretierstift trotzdem in seiner nicht verriegelnden Stellung, so dass der Träger problemlos über diese Stellung hinweg verschoben werden kann.

Zur weiteren Erleichterung der Handhabung der Anhängerkupplung ist es vorteilhaft, wenn der mindestens eine Arretierstift unterhalb mindestens einem der Sperrbolzen vorgesehen ist. Damit kann der mindestens eine Arretierstift leicht entgegen seiner Vorspannung verstellt werden, um den Träger aus den Führungsschienen zu entfernen. Außerdem stört der mindestens eine Arretierstift in diesem Fall in keiner Weise eine mögliche Höhenverstellung des Trägers.

Vorzugsweise ist an beiden Sperrbolzen jeweils am innenseitigen Endbereich mindestens eine Handhabe vorgesehen, über die der jeweilige Sperrbolzen verstellt werden kann. Beide Sperrbolzen sind damit unabhängig voneinander bewegbar. Auf diese Weise wird eine Zweihandbedienung der Sperrbolzen realisiert, welche die Sicherheit der bedienenden Person erheblich erhöht. Insbesondere kann es auf diese Weise nicht vorkommen, dass die bedienende Person eine Hand unterhalb des Trägers hält, während der Träger verschiebbar ist. Dieser Zustand kann zu erheblichen Quetschverletzungen führen und wird durch die besondere Ausbildung der Sperrbolzen verhindert.

Um die Sperrbolzen in ihrer Arretierstellung zu halten, sind im Träger mindestens zwei Verriegelungsbolzen vorgesehen, die jeweils einem der Sperrbolzen zugeordnet sind. Diese sind ebenfalls unabhängig voneinander verstellbar. Sie können zwischen einer den Sperrbolzen freigebenden Entriegelungsstellung und einer den Sperrbolzen in seiner Arretierstellung haltenden Verriegelungsstellung verstellt werden. Die Verriegelungsbolzen wirken wiederum unabhängig voneinander, wodurch die Sicherheit der höhenverstellbaren Anhängerkupplung verbessert wird.

Es ist günstig, wenn der Verriegelungsbolzen bzw. der Sperrbolzen verschiebbar ist. Da die beiden Sperrbolzen unhabhängig voneinander bewegbar sind, ist eine gegenläufige Bewegung nach innen bzw. außen problemlos realisierbar. Insbesondere müssen hierzu keine komplizierten Getriebeelemente vorgesehen werden. Die Bolzen sind jeweils in entsprechenden Bohrungen geführt, so dass auf diese Weise eine einfache Schiebeführung realisiert ist. Die Sperrbolzen greifen in der Arretierstellung vorzugsweise in die Sackbohrung ein, während sie in der Lösestellung in den Träger zurückgezogen sind. Die Verriegelungsbolzen können hinter den jeweiligen Sperrbolzen greifen, um diesen zu arretieren. Alternativ kann der Verriegelungsbolzen auch eine radiale Nut oder eine Querbohrung des Sperrbolzens durchsetzen.

Zur Bildung eines möglichst einfachen Aufbaus ist es vorteilhaft, wenn die Verriegelungsbolzen in ihrer Verriegelungsstellung hinter den Sperrbolzen greifen. Damit müssen die Sperrbolzen im Eingriffsbereich der Verriegelungsbolzen nicht in besonderer Weise ausgebildet sein.

Zur Erhöhung der Sicherheit der Anhängerkupplung ist es vorteilhaft, wenn die Verriegelungsbolzen federnd gegen die Sperrbolzen vorgespannt sind. Auf diese Weise wird zusätzlich vermieden, dass sich die Verriegelungsbolzen selbsttätig und unbeabsichtigt in ihre Entriegelungsstellung bewegen.

Um die Verriegelungsbolzen leicht verstellen zu können, ist es günstig, wenn die Verriegelungsbolzen an ihren dem Sperrbolzen gegenüberliegenden Endbereichen mindestens eine zweite Handhabe aufweisen. An dieser zweiten Handhabe können die Verriegelungsbolzen leicht ergriffen und in ihre Entriegelungsstellung überführt werden.

Schließlich ist es günstig, wenn die Sperrbolzen mindestens eine radiale Vertiefung bzw. Nut aufweisen, in die die Verriegelungsbolzen greifen können. Auf diese Weise ergibt sich eine günstige Arretierung der Sperrbolzen in beiden Richtungen, so dass von einem Anschlag der Sperrbolzen im Bereich der Führungsschienen abgesehen werden kann.

Der Erfindungsgegenstand wird beispielhaft anhand der Zeichnung erläutert, ohne den Schutzbereich zu beschränken.

Es zeigt:
- Figur 1: eine räumliche Darstellung einer höhenverstellbaren Anhängerkupplung,
- Figur 2: eine räumliche Darstellung eines Trägers der Anhängerkupplung gemäß Figur 1 und
- Figur 3: eine zugeordnete Schnittdarstellung durch die Anhängerkupplung gemäß Figur 1 entlang der Schnittlinie III-III.

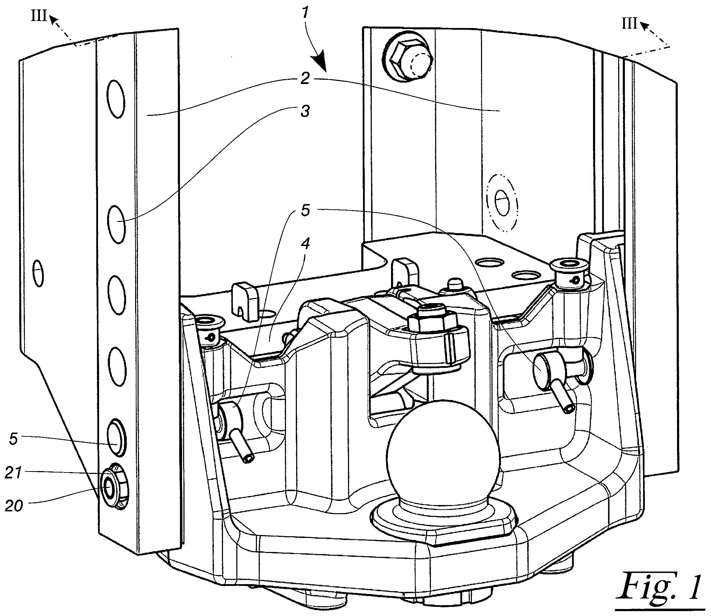

Eine höhenverstellbare Anhängerkupplung 1 gemäß Figur 1 weist zwei zueinander gerichtete, fahrzeugfeste Führungsschienen 2 auf. In diesen Führungsschienen 2 ist eine Reihe von Bohrungen 3 vorgesehen. Zwischen den Führungsschienen 2 ist ein Träger 4 vertikal verstellbar gehalten. Dieser Träger 4 weist zwei Sperrbolzen 5 auf, die in die Bohrungen 3 eingreifen können.

In einer der Führungsschienen 2 ist außerdem ein Arretierstift 20 axial verschiebbar abgestützt. Dieser Arretierstift 20 weist endseitig einen überstehenden Kragen 21 auf, der leicht mit einer Hand hintergriffen werden kann. Auf diese Weise lässt sich der Arretierstift 21 entgegen einer Vorspannung nach außen ziehen.

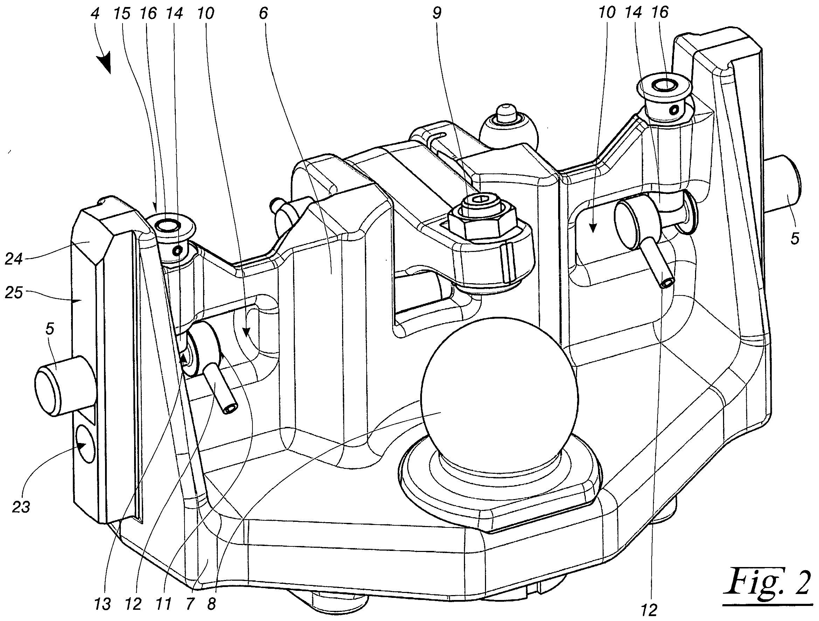

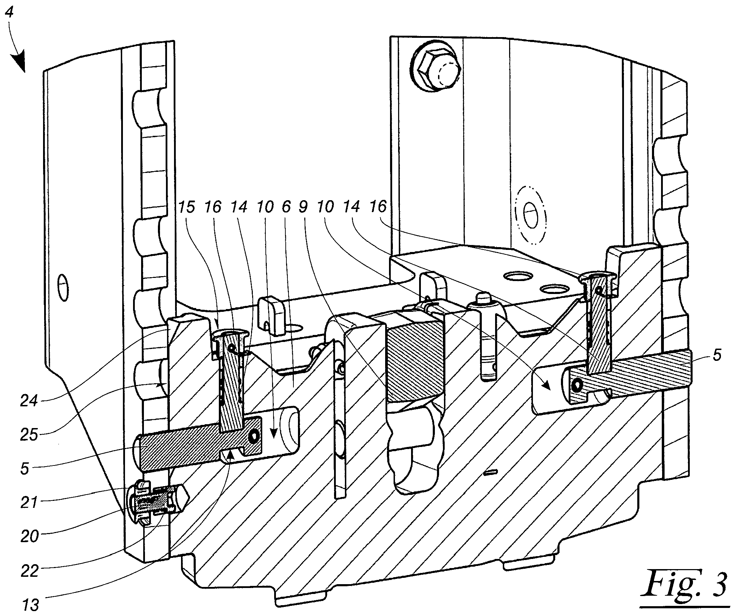

Die weitere Beschreibung erfolgt anhand der räumlichen Darstellung gemäß Figur 2 sowie der Schnittdarstellung gemäß Figur 3.

Der Träger 4 besteht im Wesentlichen aus einem L-förmigen Winkel, dessen vertikaler Schenkel 6 im Wesentlichen zwischen den Führungsschienen 2 liegt. Sein horizontaler Schenkel 7 trägt ein Kupplungsglied 8 in Form eines Kugelkopfes. Dem Kupplungsglied 8 ist ein Niederhalter 9 zugeordnet, der für eine sichere Verbindung mit einer anhängerseitigen Kugelkalotte sorgt.

Im Träger 4 sind Bohrungen 10 vorgesehen, in denen die beiden Sperrbolzen 5 unabhängig voneinander bewegbar sind. In der in den Figuren 2 und 3 dargestellten Arretierstellung dringen die Sperrbolzen 5 in die Bohrungen 3 der Führungsschienen 2 ein und arretieren damit den Träger 4 gegenüber einer Höhenverstellbarkeit.

Im Bereich ihres innenseitigen Endes 11 weisen die Sperrbolzen 5 Handhaben 12 auf. Mit Hilfe dieser Handhaben 12 können die Sperrbolzen 5 unmittelbar und unabhängig voneinander axial verschoben werden.

Um die Sperrbolzen 5 an unbeabsichtigtem Verschieben in eine nach innen zurückgezogene Lösestellung zu hindern, weisen die Sperrbolzen 5 radiale Nuten 13 auf. In diese radialen Nuten 13 greifen Verriegelungsbolzen 14, die ebenfalls axial verstellbar sind. Diese Verriegelungsbolzen 14 befinden sich in den Figuren 2 und 3 in ihrer Verriegelungsstellung. Sie sind nach oben in eine Entriegelungsstellung 8 axial verschiebbar.

Nun kann der Träger 4 in die gewünschte Höhenlage verschoben werden. Anschließend werden die beiden Sperrbolzen 5 wieder axial nach außen verschoben, so dass sie in eine andere Bohrung 3 der Führungsschiene 2 eingreifen. Bedingt durch die federnde Vorspannung der Verriegelungsbolzen 14 geraten diese selbsttätig wieder in Eingriff mit den Nuten 13 der Sperrbolzen 5.

Anhand der Schnittdarstellung gemäß Figur 3 ist außerdem erkennbar, dass der Arretierstift 20 von einer Feder 22 vorgespannt ist. Diese Feder 22 drückt den Arretierstift 20 in die dargestellte Arretierstellung, in der er in eine Sperraufnahme 23 des Trägers 4 eingreift. Auf diese Weise wird der Träger 4 in der dargestellten Stellung gehalten, in der die Sperrbolzen 5 des Trägers 4 mit den Bohrungen 3 der Führungsschienen 2 fluchten. Damit können die Sperrbolzen 5 problemlos von der Lösestellung in die Arretierstellung überführt werden.

Damit beim Einführen des Trägers 4 in die Führungsschienen 2 der Arretierstift 21 nicht manuell herausgezogen werden muss, weist der Träger 4 eine Anfasung 24 auf, die mit dem Arretierstift 20 zusammenwirkt. Beim Verschieben des Trägers 4 nach oben drückt diese Anfasung 24 gegen den Arretierstift 20 und verschiebt diesen nach außen, so dass der Träger 4 problemlos am Arretierstift 20 vorbeigeschoben werden kann.

Damit der Arretierstift 20 nicht unerwünschterweise in die Bohrung 10 für die Sperrbolzen 5 eindringt, sind die Sperrbolzen 5 derart ausgebildet, dass sie in ihrer Lösestellung mit einer zum Träger 4 gerichteten Anlagefläche 25 fluchtet. Damit bleibt der Arretierstift 20 in seiner nach außen verschobenen Lage, selbst wenn dieser mit der Bohrung 10 fluchtet.

Zum Entfernen oder Verschieben des Trägers 4 müssen zunächst die beiden Sperrbolzen 5 zurückgezogen werden, die von den Verriegelungsbolzen 14 verriegelt sind. Um die Verriegelungsbolzen 14 betätigen zu können, weisen sie an ihren oberen Enden 15 zweite Handhaben 16 auf. Die Verriegelungsbolzen 14 sind federnd gegen die Sperrbolzen 5 vorgespannt. Durch Betätigen der zweiten Handhabe 16 werden diese entgegen dieser Federkraft nach oben bewegt, bis sie in den Nuten 13 der Sperrbolzen 5 vollständig herausgetreten sind und ihre Entriegelungsstellung erreichen.

In dieser Entriegelungsstellung der Verriegelungsbolzen 14 können die Sperrbolzen 5 mit Hilfe der Handhabe 12 axial verschoben werden, um sie außer Eingriff mit den Bohrungen 3 der Führungsschienen 2 zu bringen. Nachdem dies bei beiden Verriegelungsbolzen 14 und Sperrbolzen 5 vorgenommen wurde, ist der Träger 4 ausschließlich vom Arretierstift 20 in Höhe gehalten.

Durch Herausziehen des Arretierstifts 20 anhand des Kragens 21 wird diese Arretierung aufgehoben, so dass der Träger 4 nach unten abgezogen werden kann. Sobald der Träger 4 geringfügig nach unten verschoben ist, kann der Arretierstift 20 losgelassen werden, ohne dass die Gefahr besteht, dass dieser die weitere Bewegung des Trägers 4 behindert.

### Bezugszeichenliste

- 1: höhenverstellbare Anhängerkupplung
- 2: Führungsschiene
- 3: Bohrung
- 4: Träger
- 5: Sperrbolzen
- 6: vertikaler Schenkel
- 7: horizontaler Schenkel
- 8: Kupplungsglied
- 9: Niederhalter
- 10: Bohrung
- 11: innenseitiges Ende
- 12: Handhabe
- 13: radiale Nut
- 14: Verriegelungsbolzen
- 15: oberes Ende
- 16: Handhabe
- 20: Arretierstift
- 21: Kragen
- 22: Feder
- 23: Sperraufnahme
- 24: Anfasung
- 25: Anlagefläche

## Patentansprüche

1. Höhenverstellbare Anhängerkupplung für ein Fahrzeug, wobei die Anhängerkupplung (1) mindestens einen verschiebbaren Träger (4) aufweist, der mindestens ein Kupplungsglied (8) trägt und zwischen Führungsschienen (2) geführt ist, in denen Vertiefungen und/oder Bohrungen (3) vorgesehen sind, in die bewegbare Sperrbolzen (5) eingreifen können, welche am Träger (4) zwischen einer eine Verstellung des Trägers (4) ermöglichenden Lösestellung und einer in die Vertiefungen und/oder Bohrungen (3) eingreifenden Arretierstellung verstellbar gehalten sind, in mindestens einer der Führungsschienen (2) mindestens ein Arretierstift (20) gehalten ist, der federnd gegen den verschiebbaren Träger (4) vorgespannt ist und in mindestens eine Sperraufnahme (23) des Trägers (4) eingreifen kann, um den Träger (4) in einer Stellung zu arretieren, in der die Sperrbolzen (5) mit den Vertiefungen und/oder Bohrungen (3) fluchten, **dadurch gekennzeichnet, dass** der mindestens eine Arretierstift (20) und der Träger (4) mindestens eine Anfasung (24) aufweisen, um den mindestens einen Arretierstift (20) beim Verschieben des Trägers (4) relativ zu den Führungsschienen (2) entgegen der Vorspannung vom Träger (4) wegzudrücken.

2. Anhängerkupplung nach Anspruch 1, **dadurch gekennzeichnet, dass** mindestens einer der Sperrbolzen (5) in der Lösestellung in etwa mit einer Anlagefläche (25) des Trägers (4) an der Führungsschiene (2) fluchtet, welche in etwa senkrecht zur Verschieberichtung des mindestens einen Arretierstiftes (20) ausgerichtet ist.

3. Anhängerkupplung nach Anspruch 1 oder 2, **dadurch gekennzeichnet, dass** der mindestens eine Arretierstift (20) unterhalb mindestens einem der Sperrbolzen (5) vorgesehen ist.

4. Anhängerkupplung nach mindestens einem der Ansprüche 1 bis 3, **dadurch gekennzeichnet, dass** mindestens einer der Sperrbolzen (5) an seinem innenseitigen Endbereich (11) jeweils mindestens eine Handhabe (12) zum unmittelbaren Verstellen der Sperrbolzen (5) aufweist.

5. Anhängerkupplung nach mindestens einem der Ansprüche 1 bis 4, **dadurch gekennzeichnet, dass** im Träger (4) mindestens zwei Verriegelungsbolzen (14) unabhängig voneinander verstellbar gehalten sind, die relativ zu jedem der Sperrbolzen (5) zwischen einer den jeweiligen Sperrbolzen (5) freigebenden Entriegelungsstellung und einer den jeweiligen Sperrbolzen (5) in seiner Arretierstellung haltenden Verriegelungsstellung verstellbar sind.

6. Anhängerkupplung nach Anspruch 5, **dadurch gekennzeichnet, dass** mindestens einer der Verriegelungsbolzen (14) und/oder Sperrbolzen (5) axial verschiebbar ist.

7. Anhängerkupplung nach Anspruch 5 oder 6, **dadurch gekennzeichnet, dass** der Verriegelungsbolzen (14) in seiner Verriegelungsstellung innenseitig hinter den zugeordneten Sperrbolzen (5) greift.

8. Anhängerkupplung nach mindestens einen der Ansprüche 5 bis 7, **dadurch gekennzeichnet, dass** der mindestens eine Verriegelungsbolzen (14) federnd gegen den Sperrbolzen (5) vorgespannt ist.

9. Anhängerkupplung nach mindestens einen der Ansprüche 5 bis 8, **dadurch gekennzeichnet, dass** mindestens einer der Verriegelungsbolzen (14) an seinem dem Sperrbolzen (5) gegenüberliegenden Endbereich (15) mindestens eine zweite Handhabe (16) aufweist.

10. Anhängerkupplung nach mindestens einen der Ansprüche 1 bis 9, **dadurch gekennzeichnet, dass** mindestens einer der Sperrbolzen (5) mindestens eine radiale Vertiefung und/oder Nut (13) aufweist, in die der mindestens eine Verriegelungsbolzen (14) greifen kann.

## Claims

1. Height-adjustable trailer coupling for a vehicle, the trailer coupling (1) having at least one displaceable carrier (4) which carries at least one coupling member (8) and is guided between guide rails (2), in which depressions and/or bores (3) are provided, into which movable locking bolts (5) can engage which are held on the carrier (4) such that they can be adjusted between a release position which makes an adjustment of the carrier (4) possible and a retaining position which engages into the depressions and/or bores (3), at least one retaining pin (20) being held in at least one of the guide rails (2), which retaining pin (20) is prestressed in a sprung manner against the displaceable carrier (4) and can engage into at least one locking receptacle (23) of the carrier (4), in order to retain the carrier (4) in a position, in which the locking bolts (5) are aligned with the depressions and/or bores (3), **characterized in that** the at least one retaining pin (20) and the carrier (4) have at least one bevel (24), in order to press the at least one retaining pin (20) away from the carrier (4) counter to the prestress during the displacement of the carrier (4) relative to the guide rails (2).

2. Trailer coupling according to Claim 1, **characterized in that** at least one of the locking bolts (5) is aligned in the release position approximately with a bearing face (25) of the carrier (4) on the guide rail (2) which is oriented approximately perpendicularly with respect to the displacement direction of the at least one retaining pin (20).

3. Trailer coupling according to Claim 1 or 2, **characterized in that** the at least one retaining pin (20) is provided below at least one of the locking bolts (5).

4. Trailer coupling according to at least one of Claims 1 to 3, **characterized in that**, on its inner-side end region (11), at least one of the locking bolts (5) has in each case at least one handle (12) for direct adjustment of the locking bolts (5).

5. Trailer coupling according to at least one of Claims 1 to 4, **characterized in that** at least two locking pins (14) are held in the carrier (4) such that they can be adjusted independently of one another, which locking pins (14) can be adjusted relative to each of the locking bolts (5) between an unlocked position which releases the respective locking bolt (5) and a locked position which holds the respective locking bolt (5) in its retaining position.

6. Trailer coupling according to Claim 5, **characterized in that** at least one of the locking pins (14) and/or locking bolts (5) can be displaced axially.

7. Trailer coupling according to Claim 5 or 6, **characterized in that**, in its locked position, the locking pin (14) engages on the inner side behind the associated locking bolt (5).

8. Trailer coupling according to at least one of Claims 5 to 7, **characterized in that** the at least one locking pin (14) is prestressed in a sprung manner against the locking bolt (5).

9. Trailer coupling according to at least one of Claims 5 to 8, **characterized in that** at least one of the locking pins (14) has at least one second handle (16) on its end region (15) which lies opposite the locking bolt (5).

10. Trailer coupling according to at least one of Claims 1 to 9, **characterized in that** at least one of the locking bolts (5) has at least one radial depression and/or groove (13), into which the at least one locking pin (14) can engage.

## Revendications

1. Attelage réglable en hauteur pour un véhicule, l'attelage (1) présentant au moins un support déplaçable (4) qui porte au moins un organe d'accouplement (8) et qui est guidé entre des rails de guidage (2) dans lesquels sont prévus des renfoncements et/ou des alésages (3) dans lesquels peuvent s'engager des boulons de blocage déplaçables (5) qui sont retenus de manière déplaçable sur le support (4) entre une position de libération permettant un déplacement du support (4) et une position de blocage s'engageant dans les renfoncements et/ou les alésages (3), au moins une goupille d'arrêt (20) étant retenue dans au moins l'un des rails de guidage (2), laquelle est précontrainte élastiquement contre le support déplaçable (4) et peut s'engager dans au moins un logement de verrouillage (23) du support (4) afin de bloquer le support (4) dans une position dans laquelle les boulons de blocage (5) sont en affleurement avec les renfoncements et/ou les alésages (3), **caractérisé en ce que** l'au moins une goupille d'arrêt (20) et le support (4) présentent au moins un biseautage (24) afin de de repousser l'au moins une goupille d'arrêt (20) lors du déplacement du support (4) par rapport aux rails de guidage (2) à l'encontre de la précontrainte du support (4).

2. Attelage selon la revendication 1, caractérisé en ce **qu**'au moins l'un des boulons de blocage (5) est approximativement en affleurement dans la position de libération avec une surface d'appui (25) du support (4) sur le rail de guidage (2), lequel est orienté approximativement perpendiculairement à la direction de déplacement de l'au moins une goupille d'arrêt (20).

3. Attelage selon la revendication 1 ou 2, **caractérisé en ce que** l'au moins une goupille d'arrêt (20) est prévue en dessous d'au moins l'un des boulons de blocage (5).

4. Attelage selon au moins l'une quelconque des revendications 1 à 3, **caractérisé en ce qu'**au moins l'un des boulons de blocage (5) présente, au niveau de sa région d'extrémité du côté intérieur (11), à chaque fois au moins une manette (12) pour le réglage direct du boulon de blocage (5).

5. Attelage selon au moins l'une quelconque des revendications 1 à 4, **caractérisé en ce qu'**au moins deux boulons de verrouillage (14) sont retenus de manière réglable indépendamment l'un de l'autre dans le support (4), lesquels peuvent être déplacés par rapport à chacun des boulons de blocage (5) entre une position de déverrouillage libérant le boulon de blocage respectif (5) et une position de verrouillage retenant le boulon de blocage respectif (5) dans sa position de blocage.

6. Attelage selon la revendication 5, caractérisé en ce **qu**'au moins l'un des boulons de verrouillage (14) et/ou des boulons de blocage (5) est déplaçable axialement.

7. Attelage selon la revendication 5 ou 6, **caractérisé en ce que** le boulon de verrouillage (14) s'engage dans sa position de verrouillage du côté intérieur derrière le boulon de blocage associé (5).

8. Attelage selon au moins l'une quelconque des revendications 5 à 7, **caractérisé en ce que** l'au moins un boulon de verrouillage (14) est précontraint élastiquement contre le boulon de blocage (5).

9. Attelage selon au moins l'une quelconque des revendications 5 à 8, **caractérisé en ce qu'**au moins l'un des boulons de verrouillage (14) présente, au niveau de sa région d'extrémité (15) opposée au boulon de blocage (5), au moins une deuxième manette (16).

10. Attelage selon au moins l'une quelconque des revendications 1 à 9, **caractérisé en ce qu'**au moins l'un des boulons de blocage (5) présente au moins un renfoncement radial et/ou une rainure radiale (13) dans lequel ou laquelle peut s'engager l'au moins un boulon de verrouillage (14).
